# EUROPÄISCHE PATENTANMELDUNG

(11) **EP 1 008 765 A2**
(43) Veröffentlichungstag der Anmeldung: **14.06.2000**
(21) Anmeldenummer: 99124326.2
(22) Anmeldetag: 06.12.1999
(51) Int. Cl.: F15C 5/00

(54) **Mikromechanische Aktorstruktur und Mikroventil**

(30) Priorität: 08.12.1998 DE 19856583
(71) Anmelder: Fraunhofer-Gesellschaft zur Förderung der angewandten Forschung e.V., 80636 München (DE)
(72) Erfinder: Kluge, Stefan, Dipl.-Phys., 80997 München (DE); Woias, Peter, Dr., 81735 München (DE); Schmid, Andreas, 96247 Michelau (DE)
(74) Vertreter: Schoppe, Fritz, Dipl.-Ing.

(57) **Zusammenfassung**

Eine mikromechanische Aktorstruktur besitzt ein Wirkelement (20) und eine Trägerstruktur (24), wobei das Wirkelement durch eine Aufhängungseinrichtung (22) an der Trägerstruktur (24) angebracht ist. Die Aufhängungseinrichtung (22) umfaßt zumindest zwei Bereiche, die sich in unterschiedlichen Richtungen von dem Wirkelement (20) weg erstrecken und jeweils mit dem Wirkelement (20) und der Trägerstruktur (24) verbunden sind. Auf zumindest zwei derartigen Bereichen der Aufhängungseinrichtung (22) ist jeweils ein separates Aktorelement (30, 32) angeordnet, derart, daß das Wirkelement (20) durch Betätigen der Aktorelemente (30, 32) bewegbar ist. Die Aufhängungseinrichtung (22) besitzt eine Koppeleinrichtung (28), die mit dem Wirkelement (20) verbunden ist, wobei die Koppeleinrichtung (28) derart ausgebildet ist, daß bei einer Betätigung der Aktorelemente (30, 32) die Aufhängungseinrichtung (22) in Ihrer Erstrekkung zwischen dem Wirkelement (20) und der Trägerstruktur (24) verlängerbar ist. Bei einem Mikroventil ist das Wirkelement (20) durch einen Ventilstößel und die Trägerstruktur (24) durch einen Ventilgrundkörper mit einer Durchlaßöffnung (34) durch denselben gebildet.

## Beschreibung

Die vorliegende Erfindung bezieht sich auf eine mikromechanische Aktorstruktur, wie sie beispielsweise in piezoelektrisch betriebenen, mikromechanisch gefertigten Ventilen einsetzbar ist.

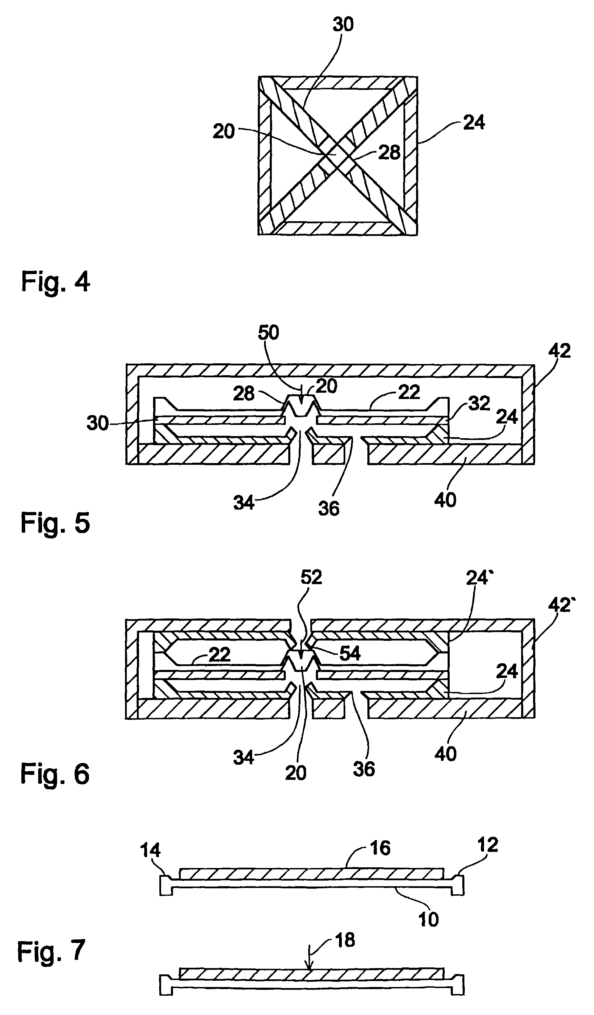

Bei Mikroventilen ist es bekannt, Biegewandler, die im allgemeinen piezoelektrische Betätigungsglieder aufweisen, zu verwenden, um eine Bewegung eines Wirkelements zu erzeugen, um eine Durchlaßöffnung des Ventils zu verschließen oder offen zu lassen. Eine übliche Form eines solchen beweglichen Bauteils ist in Fig. 7 dargestellt, wobei in Fig. 7 das bewegliche Bauteil in der Ruhelage und im ausgelenkten Zustand gezeigt ist. Das bewegliche Bauteil ist durch eine Membran 10 gebildet, die an Randbereichen 12 und 14 derselben an einer Ventilplatte (in Fig. 7 nicht dargestellt) angebracht ist. Auf der Membran ist ein Biegewandlerelement 16 angeordnet, das mit einer Spannung beaufschlagbar ist, um dadurch eine Auslenkung der Membran in die Richtung des Pfeils 18 zu bewirken, wie im unteren Teil von Fig. 7 gezeigt ist. Durch diese Bewegung der Membran 10 kann eine in der Ventilplatte angeordnete Durchlaßöffnung verschlossen oder offengelassen werden.

Ein Ausführungsbeispiel eines solchen Mikroventils, bei dem die Membran mit einer Verdickung versehen ist, die als Verschlußteil wirkt, ist in dem Abstract JP-A-07158757 offenbart. Dort ist auf einer Siliziummembran ein piezoelektrischer Aktor angebracht, durch den die Siliziummembran und somit die Verdickung derselben verschoben werden kann, um die Durchlaßöffnung einer Ventilplatte zu öffnen und zu schließen. Ein ähnliches Mikroventil mit einem magnetischen Antrieb ist in dem Abstract der JP-A-3-103680 gezeigt.

Aus der DE-A-19703415 ist ein Mikroventil bekannt, bei dem ein piezoelektrisches Betätigungsglied lediglich an den Randbereichen desselben mit einer Membran, die ein Stößelbauglied aufweist, verbunden ist, so daß durch eine durch eine Betätigung des piezoelektrischen Bauglieds bewirkte Verringerung der Länge desselben eine Bewegung des Stößelbauglieds senkrecht zu den piezoelektrischen Betätigungselement bewirkt wird.

Aus der FR-A-2642812 ist ein Mikroventil bekannt, bei dem eine Membran, die ein Stößelbauglied trägt, aus einer piezoelektrischen Keramik besteht, die mit Flächenelektroden versehen ist, so daß durch ein geeignetes Ansteuern der piezoelektrischen Membran eine Durchlaßöffnung des Mikroventils durch das Stößelbauglied geöffnet und verschlossen werden kann.

Ferner sind Aktorstrukturen bekannt, bei denen zur Betätigung eines Wirkelements Biegewandler verwendet werden, die lediglich einseitig einspannt sind. Bei derartigen Aktorstrukturen wird durch die einseitige Einspannung der Biegewandler eine Schiefstellung des Wirkelements erzeugt, wenn dasselbe in seiner ausgelenkten Position ist.

Ausgehend von dem oben genannten Stand der Technik liegt der vorliegenden Erfindung die Aufgabe zugrunde, eine neuartige laststabile mikromechanische Aktorstruktur zu schaffen.

Diese Aufgabe wird durch eine mikromechanische Aktorstruktur gemäß Anspruch 1 gelöst.

Der vorliegenden Erfindung liegt ferner die Aufgabe zugrunde, ein Mikroventil mit einer neuartigen laststabilen Aktorstruktur zu schaffen, das in geschlossenem Zustand eine gute Abdichtung einer Auslaßöffnung desselben liefert.

Diese Aufgabe wird durch ein Mikroventil gemäß Anspruch 6 gelöst.

Die vorliegende Erfindung schafft eine mikromechanische Aktorstruktur mit einem Wirkelement, einer Trägerstruktur und einer Aufhängungseinrichtung, durch die das Wirkelement an der Trägerstruktur angebracht ist, wobei die Aufhängungseinrichtung zumindest zwei Bereiche aufweist, die sich in unterschiedlichen Richtungen von dem Wirkelement weg erstrecken und jeweils mit dem Wirkelement und der Trägerstruktur verbunden sind. Auf zumindest zwei derartigen Bereichen der Aufhängungseinrichtung ist jeweils ein separates Aktorelement angeordnet, derart, daß das Wirkelement durch ein Betätigen der Aktorelemente bewegbar ist. Die Aufhängungseinrichtung besitzt eine Koppeleinrichtung, die mit dem Wirkelement verbunden ist, wobei die Koppeleinrichtung derart ausgebildet ist, daß bei einer Betätigung der Aktorelemente die Aufhängungseinrichtung in Ihrer Erstreckung zwischen dem Wirkelement und der Trägerstruktur verlängerbar ist.

Die vorliegende Erfindung schafft ferner ein Mikroventil mit einer solchen mikromechanischen Aktorstruktur, bei dem das Wirkelement einen Ventilstößel darstellt und die Trägerstruktur durch einen Ventilgrundkörper mit einer Durchlaßöffnung durch denselben gebildet ist. Bei dem derart auf gebauten Mikroventil ist der Ventilstößel durch die Aufhängungseinrichtung und die zumindest zwei Aktorelemente bewegbar, um die Durchlaßöffnung in dem Ventilgrundkörper zu verschließen oder zu öffnen.

Der erfindungsgemäßen universellen Aktorstruktur liegt die Erkenntnis zugrunde, daß es durch die Verwendung von zumindest zwei separaten Aktorelementen, die sich in unterschiedlichen Richtungen von einem Wirkelement weg erstrecken, möglich ist, eine Bewegung des Wirkelements in eine andere Richtung zu erzeugen, als dies bei herkömmlichen Aktorstrukturen, beispielsweise der, die in Fig. 7 gezeigt ist, der Fall ist. Gemäß der vorliegenden Erfindung wird eine Bewegung des Wirkelements zu der Seite hin, auf der die Aktorelemente auf einer Aufhängungseinrichtung, beispielsweise einer Membran, angebracht sind, bewirkt, während bei der in Fig. 7 dargestellten bekannten Aktorstruktur eine Bewegung der Membran in die entgegengesetzte Richtung bewirkt wird. Diese Bewegung des Mittelteils der Aktorstruktur, wie sie durch die vorliegende Erfindung geliefert wird, wird durch die Verwendung einer Mehrzahl von einzelnen Aktorelementen erreicht, die um das mittig angeordnete Wirkelement positioniert sind. Die Bewegung des Wirkelements erfolgt dann so, als ob mehrere unabhängige Aktorelemente wirken, die lediglich einseitig eingespannt sind. Um diese Wirkung zu erreichen, ist erfindungsgemäß in dem Bereich, in dem die Aufhängungseinrichtung mit dem Stößelbauglied verbunden ist, eine Koppelvorrichtung vorgesehen, die eine Verlängerung der Aufhängungseinrichtung in Ihrer Erstreckung zwischen dem Wirkelement und der Trägerstruktur ermöglicht.

Vorzugsweise werden als Aktorelemente Piezowandler verwendet, die zusammen mit der Aufhängungsstruktur, auf die dieselben aufgebracht sind, als Biegewandler wirken.

Bei bevorzugten Ausführungsbeispielen der vorliegenden Erfindung ist diese Koppeleinrichtung durch Gelenke realisiert, die durch relativ zu der restlichen Aufhängungseinrichtung in einem Winkel angeordnete Abschnitte erzeugt sind. Durch diese Ausbildung der Koppeleinrichtung wird erreicht, daß das mittig angeordnete Wirkelement bei Belastung in vertikaler Richtung stabil bleibt, d.h. steif ist.

Die erfindungsgemäße mikromechanische Aktorstruktur ist insbesondere zur Verwendung in Mikroventilen geeignet. Durch die mehrseitige Einspannung des Ventilstößels kann derselbe in allen Betriebszuständen waagrecht gehalten werden. In Kombination mit der Stabilität des Stößels in vertikaler Richtung ist dadurch ein Mikroventil mit ausgezeichneten Dichtungseigenschaften realisierbar. Ferner können mittels der erfindungsgemäßen Aktorstruktur sowohl normal-geschlossene als auch normal-offene Ventile realisiert werden. Auch eine Kombination zu einem sogenannten 3/2-Wege-Ventil ist möglich. Derartige Ventile können vorteilhaft in der Industrie-Pneumatik, der Medizintechnik, der Dosiertechnik, usw. eingesetzt werden.

Bei bevorzugten Ausführungsbeispielen der vorliegenden Erfindung sind vier Biegewandler vorgesehen, die das Wirkelement mit vier Ecken der Trägerstruktur bzw. des Ventilgrundkörpers verbinden, wodurch die freie Länge und damit die Auslenkung der Biegewandler maximiert werden kann.

Das Wirkelement, die Aufhängungseinrichtung und die in derselben enthaltene Koppeleinrichtung sind erfindungsgemäß vorzugsweise einstückig aufgebaut. Beispielsweise können die genannten Komponenten vorteilhaft in einem Siliziumsubstrat strukturiert sein.

Bevorzugte Ausführungsbeispiele der vorliegenden Erfindung werden nachfolgend bezugnehmend auf die beiliegenden Zeichnungen näher erläutert. Es zeigen:
- Fig. 1: eine schematische Querschnittansicht eines ersten Ausführungsbeispiels eines Mikroventils, das eine erfindungsgemäße Aktorstruktur aufweist;
- Fig. 2: eine schematische Querschnittansicht des in Fig. 1 gezeigten Mikroventils im betätigten Zustand;
- Fig. 3: eine schematische Teilquerschnittansicht zur Erläuterung der Wirkungsweise der erfindungsgemäßen Aktorstruktur;
- Fig. 4: eine schematische Draufsicht eines Ausführungsbeispiels einer erfindungsgemäßen Aktorstruktur;
- Fig. 5: eine schematische Querschnittansicht eines zweiten Ausführungsbeispiels eines Mikroventils, was eine erfindungsgemäße Aktorstruktur aufweist;
- Fig. 6: eine schematische Querschnittansicht eines dritten Ausführungsbeispiels eines Mikroventils, das eine erfindungsgemäße Aktorstruktur aufweist; und
- Fig. 7: schematische Querschnittansichten einer bekannten Aktorstruktur.

Obwohl im folgenden bevorzugte Ausführungsbeispiele der vorliegenden Erfindung anhand von Mikroventilen erläutert werden, ist es klar, daß die erfindungsgemäße Aktorstruktur auch in anderen Bauelementen Einsatz finden kann, bei denen eine definierte Bewegung eines Wirkelements durchzuführen ist, beispielsweise in mikromechanischen Relais und dergleichen.

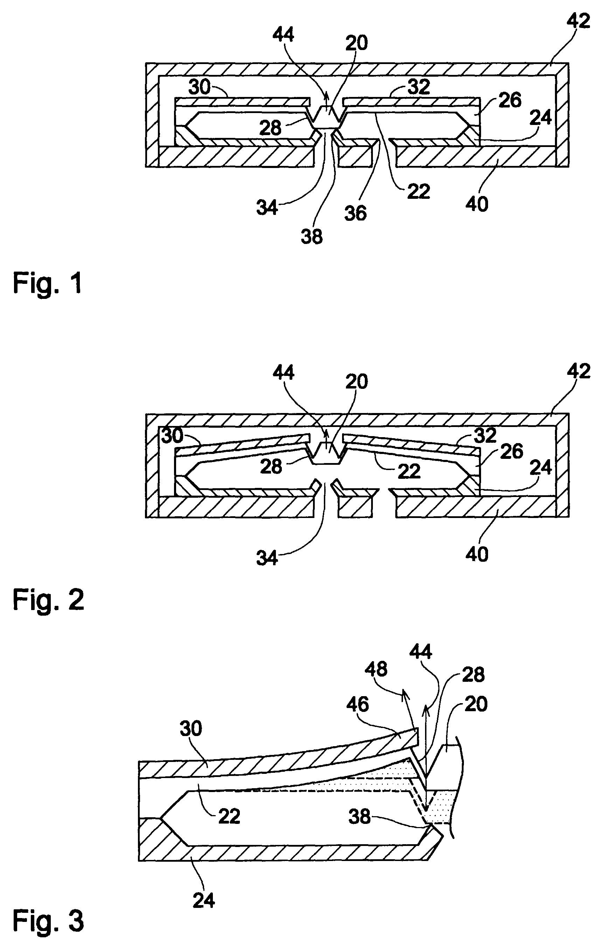

Bezugnehmend auf Fig. 1 wird nachfolgend ein erstes Ausführungsbeispiel eines erfindungsgemäßen Mikroventils, das eine erfindungsgemäße Aktorstruktur aufweist, beschrieben. Wie in Fig. 1 dargestellt ist, ist ein Ventilstößel 20 über eine Aufhängungseinrichtung 22 mit einer Ventilplatte 24 verbunden.

Bei dem dargestellten Ausführungsbeispiel ist die Aufhängungseinrichtung durch vier Arme gebildet, wie in Fig. 4 zu sehen ist. Die Arme weisen dabei eine solche Dicke auf, daß dieselben zusammen mit darauf angebrachten Aktorelementen 30, 32, die bei bevorzugten Ausführungsbeispielen der vorliegenden Erfindung durch Piezoelemente gebildet sind, Biegewandler definieren. Die Aufhängungseinrichtung 22 weist in ihrem Randbereich Verdickungen 26 auf, über die sie an der Ventilplatte 24, die auch als Ventilgrundkörper bezeichnet werden kann, angebracht ist. Die Aufhängungseinrichtung 22 weist an den Bereichen, an denen dieselbe mit dem Ventilstößel 20 verbunden ist, Gelenke 28 auf, die eine laterale Dehnung der Aufhängungseinrichtung 22 ermöglichen, wie nachfolgend näher erläutert wird.

Der Ventilgrundkörper 24, bzw. die Ventilplatte, weist zwei Durchlaßöffnungen 34 und 36 auf, wobei eine Durchlaßöffnung 34 durch den Ventilstößel 20 verschließbar ist. Diese Durchlaßöffnung 34 besitzt eine Dichtkante 38, die dieselbe umfangsmäßig umgibt. Die Ventilplatte 24 ist auf einem Gehäuseboden 40 angebracht, der ebenfalls entsprechend zwei Durchlaßöffnungen aufweist. Mit dem Gehäuseboden 40 verbunden ist ein Gehäusedeckel 42, so daß die oben beschriebene Ventilstruktur von dem Gehäuse vollständig umgeben ist.

Die Aufhängungseinrichtung kann alternativ zu dem beschriebenen Ausführungsbeispiel aus einer anderen Anzahl von Armen bestehen, solange mehr als zwei Arme vorgesehen sind. Ferner kann die Aufhängungseinrichtung aus einer Membran bestehen, auf der die voneinander getrennten Aktorelemente vorgesehen sind.

Die Funktionsweise dieses Mikroventils wird nachfolgend bezugnehmend auf die Fig. 1 bis 3 erläutert. Fig. 1 zeigt das Mikroventil in unbetätigtem Zustand, wobei durch Betätigen der Aktorelemente 30 und 32, die zusammen mit den jeweiligen Bereichen der Aufhängungseinrichtung 22 als Biegewandler wirksam sind, eine Bewegung des Ventilstößels 20 in Richtung des Pfeils 44 bewirkt werden kann. Eine schematische Darstellung des betätigten Mikroventils ist in Fig. 2 dargestellt. Durch das Anlegen einer geeigneten Spannung an die Aktorelemente 30 und 32 wird, da diesselben durch die Gelenke 28 wie einseitig eingespannte Biegewandler wirken, eine Bewegung der inneren Bereiche derselben in die durch den Pfeil 44 angezeigte Richtung bewirkt, was zur Folge hat, daß auch der Ventilstößel 20 in diese Richtung bewegt wird. Diese Bewegung ist im wesentlichen ungehindert möglich, da die Gelenke 28 überdies eine Dehnung der Aufhängungseinrichtung 28 in lateraler Richtung ermöglichen.

Fig. 3 ist eine vergrößerte Ansicht des linken Teils der erfindungsgemäßen Aktorstruktur, wobei verschiedene Bewegungsphasen vom unbetätigten Zustand zum betätigten Zustand dargestellt sind. Durch das Anlegen einer Spannung an das Aktorelement 30 bewegt sich das innere Ende 46 desselben aufgrund des Zusammenwirkens mit der Aufhängungseinrichtung als Biegewandler in der Richtung, die durch den Pfeil 48 in Fig. 3 gezeigt ist. Diese Bewegung des Biegewandlers erzeugt durch das Gelenk 28 eine vertikale Bewegung des Ventilstößels 44 in der Richtung des Pfeils 44, so daß die Unterseite des Ventilstößels 20, die zum Verschluß der Durchlaßöffnung 34 dient, in jeder Position eine waagrechte Stellung einnimmt. Dadurch kann zwischen der Unterseite des Ventilstößels 20 und der Dichtkante 38 um den gesamten Umfang der Durchlaßöffnung 34 eine ausgezeichnete Dichtung erhalten werden. Die Dehnung der Aufhängungseinrichtung 22 in lateraler Richtung ist dadurch möglich, daß das Gelenk 28 durch einen Bereich der Aufhängungseinrichtung 22 gebildet ist, der hinsichtlich der übrigen Abschnitte der Aufhängungseinrichtung 22 in einem Winkel ausgerichtet ist. Durch eine Betätigung des Biegewandlers kann der Winkel zwischen diesem winkeligen Abschnitt und dem restlichen Bereich der Aufhängungseinrichtung sowie zwischen diesem winkeligen Abschnitt und dem Ventilstößel 20 variieren, so daß eine laterale Dehnung der Aufhängungseinrichtung in ihrer Erstreckung zwischen dem Ventilstößel 20 und dem Befestigungsbereich an der Ventilplatte 24 erreicht wird.

Durch das oben beschriebene Betätigungsprinzip wird zum einen erreicht, daß der mittig angeordnete Ventilstößel 20 in vertikaler Richtung stabil bleibt und ferner bei einer Betätigung der Aktorstruktur waagrecht gehalten wird.

Zur Realisierung der erfindungsgemäßen Aktorstruktur sind zumindest zwei separate Biegewandler, die sich ausgehend von dem Ventilstößel in unterschiedliche Richtungen erstrecken, erforderlich. In gleicher Weise kann jedoch eine größere Anzahl von Biegewandlern verwendet sein, die sich von dem Wirkelement, d.h. im Falle eines Mikroventils, von dem Ventilstößel, weg erstrecken, wobei die Biegewandler jedoch getrennt voneinander sind, um eine jeweils unabhängige Bewegung derselben, die nicht durch die Bewegung benachbarter Biegewandler beeinflußt wird, zu ermöglichen.

In Fig. 4 ist ein bevorzugtes Ausführungsbeispiel einer Anordnung von vier Biegewandlern 30 dargestellt, die an den vier Eckpunkten mit einer Ventilplatte 24 verbunden sind, und jeweils über Gelenke 28 mit einem Ventilstößel 20 verbunden sind. Durch diese Anordnung kann die freie Länge und somit die Auslenkung der Biegewandler maximiert werden, um einen erhöhten Durchfluß durch die Durchlaßöffnung in der Ventilplatte zu ermöglichen.

In Fig. 5 ist ein alternatives erfindungsgemäßes Mikroventil dargestellt, bei dem die Durchlaßöffnung 34 im unbetätigten Zustand offen ist. Solche Komponenten, die bei dem in Fig. 5 dargestellten Ausführungsbeispiel denen des in Fig. 1 dargestellten Ausführungsbeispiels entsprechen, sind mit identischen Bezugszeichen bezeichnet. Bei dem in Fig. 5 dargestellten Ausführungsbeispiel sind die Aktorelemente 30 und 32 auf der der Ventilplatte 24 zugewandten Oberfläche der Aufhängungseinrichtung 22 angeordnet. Der Ventilchip, in dem die Aufhängungseinrichtung, die die Gelenke 28 aufweist, und der Ventilstößel 20 strukturiert sind, entspricht im wesentlichen dem in Fig. 1 dargestellten Ventilchip, wobei derselbe lediglich "kopfüber" installiert ist, wodurch bewirkt wird, daß bei Betätigung der Aktorelemente der Ventilstößel in die Richtung des Pfeils 50 nach unten bewegt wird. Dabei sind bei dem in Fig. 5 dargestellten Ausführungsbeispiele die Randbereiche der Aufhängungseinrichtung 22 über die Aktorelemente 30 und 32 mit der Ventilplatte 24 verbunden. Die Wirkungsweise des in Fig. 5 dargestellten Mikroventils entspricht im wesentlichen der des in Fig. 1 dargestellten Mikroventils, wobei der Unterschied lediglich darin besteht, daß das in Fig. 5 dargestellte Mikroventil im unbetätigten Zustand offen ist, während das in Fig. 1 dargestellte Mikroventil im unbetätigten Zustand geschlossen ist.

In Fig. 6 ist eine Kombination der in den Fig. 1 und 5 dargestellten Ausführungsbeispiele gezeigt, wodurch ein 3/2-Wege-Ventil erhalten wird. Bei diesem 3/2-Wege-Ventil ist oberhalb des Ventilchips eine zusätzliche Ventilplatte 24', die lediglich eine Durchlaßöffnung 52 mit einer Dichtkante 54 aufweist, mit den Rändern der Aufhängungseinrichtung 22 verbunden. Überdies weist der Gehäusedeckel 42' eine entsprechende Durchlaßöffnung, die mit der Durchlaßöffnung 52 der zusätzlichen Ventilplatte 24' fluidmäßig in Verbindung ist, auf. Somit ist in unbetätigter Stellung der Aktorstruktur, die in Fig. 6 gezeigt ist, eine fluidmäßig Verbindung zwischen den zwei Durchlaßöffnungen 34 und 36 realisiert, während, wenn die Aktorstruktur betätigt ist, eine fluidmäßige Verbindung zwischen den Durchlaßöffnungen 36 und 52 besteht.

Bei bevorzugten Ausführungsbeispielen der vorliegenden Erfindung sind der Ventilchip, der aus Aufhängungsstruktur und Ventilstößel besteht, sowie die jeweiligen Ventilplatten aus Silizium gebildet. Dabei erlaubt die beschriebene Anordnung der Komponenten großteils eine rationelle Full-Wafer-Fertigung der Strukturen. Ferner bestehen die Dichtflächen der Ventile aus je zwei Siliziumflächen, so daß durch diese ideal glatten Flächen wesentlich verbesserte Dichteigenschaften erhalten werden können, im Vergleich zu Dichtungen gegen das Aktorelement, wie Sie bei einem 3/2-Wege-Ventil unter Verwendung eines herkömmlichen Biegewandlers, wie er in Fig. 7 gezeigt ist, auftreten. Bei einem solchen herkömmlichen 3/2-Wege-Ventil wäre eine zusätzliche Elastomerdichtung zwischen Aktorelement und Ventilplatte notwendig, da das Aktorelement, der im Normalfall durch eine Piezokeramik gebildet ist, im allgemeinen zu rauhe Oberflächen besitzt.

Durch den Aufbau der erfindungsgemäßen Aktorstruktur besitzen die Biegewandler den Vorteil einer nahezu gleichmäßigen Krafteinleitung über fast die gesamt Fläche, so daß Spannungsspitzen vermieden werden können. Ferner ist die erfindungsgemäße Aktorstruktur durch die beschriebene Anordnung der Komponenten laststabiler als bekannte Vorrichtungen. Zwar weist die erfindungsgemäße Aktorstruktur gegenüber bekannten Vorrichtungen einen geringeren Leerlaufhub auf, jedoch ist der Hub bei anliegender Nennlast bei gleichen Randbedingungen höher als bei bekannten Bauteilen gleicher Baugröße. Überdies sind bei der erfindungsgemäßen Aktorvorrichtung verglichen mit bekannten Einrichtungen geringere elektrische Betriebsspannungen notwendig.

## Patentansprüche

1. Mikromechanische Aktorstruktur mit folgenden Merkmalen:
einem Wirkelement (20);
einer Trägerstruktur (24); und
einer Aufhängungseinrichtung (22), durch die das Wirkelement (20) an der Trägerstruktur (24) angebracht ist, wobei die Aufhängungseinrichtung (22) zumindest zwei Bereiche aufweist, die sich in unterschiedlichen Richtungen von dem Wirkelement (20) weg erstrecken und jeweils mit dem Wirkelement (20) und der Trägerstruktur (24) verbunden sind,
wobei auf zumindest zwei derartigen Bereichen der Aufhängungseinrichtung (22) jeweils ein separates Aktorelement (30, 32) angeordnet ist, derart, daß das Wirkelement (20) durch Betätigen der Aktorelemente (30, 32) bewegbar ist, und
wobei die Aufhängungseinrichtung (22) eine Koppeleinrichtung (28) aufweist, die mit dem Wirkelement (20) verbunden ist, wobei die Koppeleinrichtung (28) derart ausgebildet ist, daß bei einer Betätigung der Aktorelemente (30, 32) die Aufhängungseinrichtung (22) in Ihrer Erstreckung zwischen dem Wirkelement (20) und der Trägerstruktur (24) verlängerbar ist.

2. Mikromechanische Aktorstruktur nach Anspruch 1, bei der die Koppeleinrichtung (28) relativ zu der restlichen Aufhängungseinrichtung in einem Winkel angeordnete Abschnitte aufweist, wobei durch eine Änderung des Winkels die Aufhängungseinrichtung (22) verlängerbar ist.

3. Mikromechanische Aktorstruktur nach Anspruch 1 oder 2 bei der die Aufhängungseinrichtung (22) vier Bereiche aufweist, die sich zu vier Eckpunkten der Trägerstruktur (24) erstrecken, wobei auf jedem dieser Bereiche ein separates Aktorelement (30) angeordnet ist.

4. Mikromechanische Aktorstruktur nach einem der Ansprüche 1 bis 3, bei der die Aktorelemente (30, 32) Piezowandler sind.

5. Mikromechanische Aktorstruktur nach einem der Ansprüche 1 bis 4, bei der das Wirkelement (20) und die Aufhängungseinrichtung (22) einstückig ausgebildet sind.

6. Mikroventil mit folgenden Merkmalen:
einem Ventilstößel (20);
einem Ventilgrundkörper (24) mit einer Durchlaßöffnung (34) durch denselben; und
einer Aufhängungseinrichtung (22), durch die der Ventilstößel (20) an dem Ventilgrundkörper (24) angebracht ist, wobei die Aufhängungseinrichtung (22) zumindest zwei Bereiche aufweist, die sich in unterschiedlichen Richtungen von dem Ventilstößel (20) weg erstrecken, und jeweils mit dem Ventilstößel (20) und dem Ventilgrundkörper (24) verbunden sind,
wobei auf zumindest zwei derartigen Bereichen der Aufhängungseinrichtung (22) jeweils ein separates Aktorelement (30, 32) angeordnet ist, derart, daß durch Betätigen der Aktorelemente (30, 32) der Ventilstößel (20) bewegbar ist, um die Durchlaßöffnung (34) in dem Ventilgrundkörper (24) zu verschließen oder zu öffnen, und wobei die Aufhängungseinrichtung (22) eine Koppeleinrichtung (28) aufweist, die mit dem Ventilstößel (20) verbunden ist, wobei die Koppeleinrichtung (28) derart ausgebildet ist, daß bei einer Betätigung der Aktorelemente (30, 32) die Aufhängungseinrichtung (22) in Ihrer Erstreckung zwischen dem Ventilstößel (20) und dem Ventilgrundkörper (24) verlängerbar ist.

7. Mikroventil nach Anspruch 6, bei dem die Koppeleinrichtung (28) relativ zu der restlichen Aufhängungseinrichtung (22) in einem Winkel angeordnete Abschnitte aufweist, wobei durch eine Änderung des Winkels die Aufhängungseinrichtung (22) verlängerbar ist.

8. Mikroventil nach Anspruch 6 oder 7, bei dem die Aufhängungseinrichtung (22) vier Bereiche aufweist, die sich zu vier Eckpunkten des Ventilgrundkörpers (24) erstrecken.

9. Mikroventil nach einem der Ansprüche 6 bis 8, bei dem die Aktorelemente (30, 32) Piezowandler sind.

10. Mikroventil nach einem der Ansprüche 6 bis 9, bei dem der Ventilstößel (20) die Durchlaßöffnung (34) verschließt, wenn die Aktorelemente (30, 32) nicht betätigt sind.

11. Mikroventil nach einem der Ansprüche 6 bis 9, bei dem der Ventilstößel (20) die Durchlaßöffnung (34) offenläßt, wenn die Aktorelemente (30, 32) nicht betätigt sind.

12. Mikroventil nach einem der Ansprüche 6 bis 11, bei dem eine Ventilplatte (24') mit einer Durchlaßöffnung (52) in derselben auf der von dem Ventilgrundkörper (24) abgewandten Seite der Aufhängungseinrichtung (22) mit derselben verbunden ist, derart, daß der Ventilstößel (20) in einer ersten Stellung die Durchlaßöffnung (52) der Ventilplatte (24') verschließt und die Durchlaßöffnung (34) des Ventilgrundkörpers (24) offenläßt und in einer zweiten Stellung die Durchlaßöffnung (52) der Ventilplatte (24') offenläßt und die Durchlaßöffnung (34) des Ventilgrundkörpers (24) verschließt.

13. Mikroventil nach einem der Ansprüche 6 bis 12, bei dem der Ventilstößel (20) und die Aufhängungseinrichtung (22) einstückig ausgebildet sind.
